(19) Europäisches Patentamt / European Patent Office / Office européen des brevets

(11) **EP 3 207 366 B1**

(12) **FASCICULE DE BREVET EUROPEEN**

(45) Date de publication et mention
de la délivrance du brevet:
**31.03.2021 Bulletin 2021/13**

(21) Numéro de dépôt: **15791686.7**

(22) Date de dépôt: **06.10.2015**

(51) Int Cl.:
*G01N 29/11* (2006.01)       *B23K 31/12* (2006.01)
*B29C 65/16* (2006.01)       *B29C 65/82* (2006.01)
*B29C 65/00* (2006.01)       *B29L 31/30* (2006.01)

(86) Numéro de dépôt international:
**PCT/FR2015/052676**

(87) Numéro de publication internationale:
**WO 2016/059318 (21.04.2016 Gazette 2016/16)**

(54) **PROCEDE ET DISPOSITIF DE DIAGNOSTIC DE LA QUALITE D'UN CORDON DE SOUDURE LASER**

VERFAHREN UND VORRICHTUNG ZUR DIAGNOSE DER QUALITÄT EINER LASERSCHWEISSRAUPE

METHOD AND DEVICE FOR DIAGNOSING THE QUALITY OF A LASER WELDING BEAD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.10.2014 FR 1460000**

(43) Date de publication de la demande:
**23.08.2017 Bulletin 2017/34**

(73) Titulaire: **Renault S.A.S.**
**92100 Boulogne-Billancourt (FR)**

(72) Inventeurs:
• **MOOR, Christian**
  **F-78470 Saint Lambert des Bois (FR)**
• **ROUMADNI, Hichame**
  **F-28100 Dreux (FR)**
• **KERBIGUET, Jean-Gilles**
  **F-78150 Le Chesnay (FR)**

(56) Documents cités:
WO-A1-2012/080082       JP-A- 2005 324 235
US-A1- 2002 117 485       US-A1- 2005 132 809

**Description**

L'invention concerne le domaine du Contrôle Non Destructif des soudures de matériaux plastiques. Elle porte sur un procédé permettant de diagnostiquer la qualité de telles soudures, ainsi que le dispositif mettant en œuvre un tel procédé.

Pour répondre aux objectifs d'allégement des véhicules et contribuer à la diminution des émissions de $CO_2$, l'industrie automobile s'oriente, entre autres, vers la conception de pièces de carrosserie en plastique chargé pour remplacer les pièces habituelles en tôle.

Pour assembler de telles pièces en plastique, généralement une soudure laser est réalisée. Cette soudure est contrôlée à l'aide d'un pyromètre qui capte le rayonnement émis par le point de soudure. Ce signal, une fois traité, renseigne sur la qualité du cordon de soudure réalisé. Toutefois, ce moyen de contrôle pyrométrique peut contenir des erreurs ou dériver avec le temps. Ainsi, il est nécessaire d'avoir d'autres moyens de contrôle qui permettent de vérifier la qualité de ces soudures et repérer d'éventuelles erreurs ou dérives du système de contrôle pyrométrique.

Un des moyens les plus utilisés consiste à réaliser des tests destructifs sur des échantillons de pièces soudées, par exemple, en les exposant à des forces de traction ou de cisaillement. L'inconvénient majeur de ce type de tests est que les pièces qui ont servi aux tests sont par la suite inutilisables. Pour limiter le recours à ce type de tests, il est nécessaire de développer des méthodes non destructives.

Il est aussi connu par la demande de brevet US-A-2005/0132809 un procédé de contrôle non destructif d'une soudure entre deux pièces métalliques à l'aide d'ondes ultrasonores.

Pour répondre à ce besoin, l'invention a pour objectif de proposer un procédé de diagnostic de la qualité d'une soudure laser de deux pièces en plastique qui soit non destructif pour limiter le recours aux méthodes destructives. Un autre objectif de l'invention est de fournir un procédé non destructif dont les résultats peuvent être corrélés avec les résultats du contrôle par le système pyrométrique en vue de détecter d'éventuelles erreurs ou dérives et permettre ainsi d'affiner la calibration dudit système de contrôle pyrométrique.

Ces objectifs sont réalisés grâce à un procédé de diagnostic de la qualité d'un cordon de soudure selon la revendication 1.

Ainsi, le procédé selon la présente invention se base sur la mesure d'un ensemble d'atténuations ultrasonores. Une telle mesure n'est pas destructive et permet donc d'utiliser les pièces soudées, après la mesure, sans que leurs propriétés soient modifiées. De plus, une telle méthode de test peut être utilisée de façon autonome et peut renseigner à elle seule sur la qualité d'un cordon de soudure laser. Ceci permet donc de limiter significativement le recours aux méthodes destructives.

Un autre avantage de cette méthode réside dans sa facilité d'utilisation et la souplesse qu'elle procure. En effet, pour réaliser un test, il suffit de poser un capteur ultrasonore sur une face de l'une des pièces soudées et de déplacer ce capteur le long du cordon de soudure liant ces deux pièces. Il n'y a aucun besoin de déplacer les pièces soudées ou de les placer dans une position particulière, ni de leur appliquer une quelconque contrainte mécanique. De plus, un tel test peut être réalisé à n'importe quel moment après la soudure. La mesure peut également être refaite un nombre illimité de fois, par exemple, en cas de doute sur la qualité de la soudure.

Selon un mode de réalisation particulier, l'ensemble d'atténuations ultrasonores est obtenu par la technique dite à ultrasons multiéléments. Cette technique utilise un capteur composé de N éléments en forme d'une barrette linéaire. Ces éléments, sollicités avec un balayage électronique, couvrent en une seule mesure toute la largeur du cordon de soudure laser. Ainsi, la mesure est à la fois rapide et la largeur du cordon peut être mesurée avec précision.

Selon un mode de réalisation, ladite largeur pondérée seuil Ls est déterminée préalablement, par comparaison d'un ensemble de largeurs pondérées Lp obtenues sur un ensemble de paires de pièces en plastique où chaque paire est liée par un cordon de soudure laser, avec des résultats obtenus par une méthode de tests destructifs sur lesdites paires de pièces en plastique.

Les mesures destructives restent l'outil de référence utilisé pour tester la qualité de soudures laser. En procédant de la façon décrite ci-dessus, la largeur seuil est déterminée avec précision. De plus, grâce à une méthode non destructive telle que celle présentée dans le cadre de cette invention, l'utilisation d'une méthode destructive pourra être limitée à des éprouvettes et non utilisée directement sur des pièces destinées à une utilisation finale, par exemple sur un élément d'une voiture.

Avantageusement, ladite méthode de tests destructifs peut consister en la résistance à la traction ou au cisaillement.

Selon une application particulière, ladite largeur pondérée Lp est calculée par la formule,

$$Lp = \Sigma(Pi \times Li)/Lo,$$

où Pi est la longueur de mesure du capteur et Li la largeur moyenne du cordon de soudure, à chaque pas du capteur, Lo étant la longueur totale du cordon.

En procédant de cette façon, on tient compte du fait que la largeur du cordon peut varier lors du déplacement pas à pas du capteur ultrasonore. Ainsi, par cette formule la qualité de soudure déterminée est la qualité globale du cordon.

Selon l'invention, le procédé comporte également une mesure pyrométrique, connue de l'homme du métier, permettant de renseigner sur la qualité du cordon de soudure, ladite mesure pyrométrique étant concomitante à la soudure laser des deux pièces. L'avantage d'une telle technique réside dans le fait qu'elle permet un contrôle en temps réel des cordons de soudure. Néanmoins, le contrôle par cette technique peut contenir des erreurs dues à un mauvais calibrage et/ou des dérives.

Le résultat, concernant la qualité de la soudure, obtenu suivant les étapes a) à c), est comparé avec le résultat obtenu par la mesure pyrométrique sur ledit cordon de soudure laser, cette comparaison permettant de déterminer si le système pyrométrique doit être recalibré. Ceci permet de détecter d'éventuelles erreurs ou dérives du système de contrôle et de les corriger.

De façon encore plus avantageuse, le procédé selon la revendication comprend un cycle d'apprentissage qui exploite le résultat de ladite comparaison entre résultats par les étapes a) à c) avec les résultats de la mesure pyrométrique, pour affiner la calibration du système de mesure pyrométrique. De cette façon, une mise à jour de la base de données du système de mesure pyrométrique se fait de façon automatique à chaque fois que des tests sont réalisés par la méthode ultrasonore.

L'invention concerne également un dispositif revendiqué dans la revendication 7.

D'autres caractéristiques et avantages de l'invention apparaitront plus clairement à la lecture de la description suivante d'un mode de réalisation, donné à titre d'exemple illustratif et non limitatif, et des dessins annexés, parmi lesquels :

- la figure 1 est une représentation schématique du principe de mesure selon l'invention;
- la figure 2 est une représentation schématique d'un cordon de soudure laser et du principe de calcul de la largeur pondérée Lp.

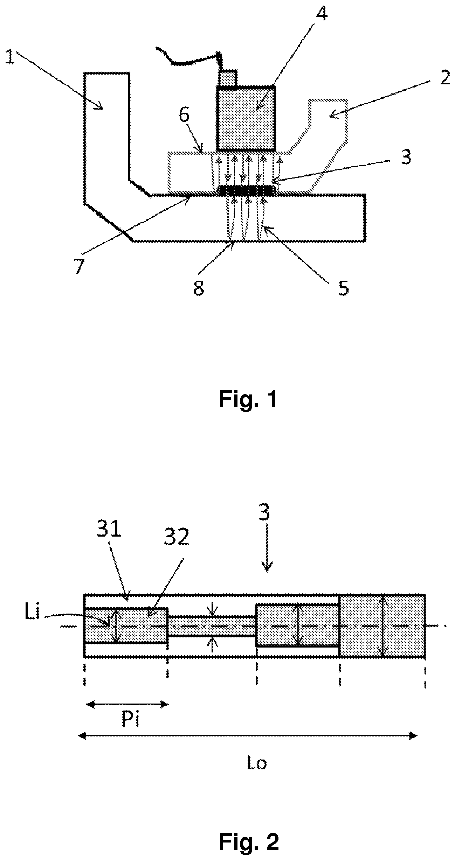

Dans la figure 1, sont représentées deux pièces en plastique 1, 2 liées par un cordon de soudure laser 3. Afin de diagnostiquer la qualité de ce cordon de soudure, un capteur 4 ultrasonore multiéléments est mis en contact avec la face extérieure 6 de l'une des deux pièces 1, 2 dans une zone parallèle au cordon de soudure. Le capteur est lié à une unité de mesure ultrasonore, non représentée sur figure 1. Ladite unité est d'un genre connu en soi et n'est donc pas décrite ici. L'ensemble, capteur ultrasonore et unité de mesure ultrasonore, peut constituer un ensemble de mesure autonome qui permet de collecter des données. Ces données sont ensuite traitées par une unité de calcul avec laquelle ledit ensemble de mesure autonome est connecté après la collecte des données. Alternativement, le capteur ultrasonore et l'unité de mesure ultrasonore sont liés de façon permanente à l'unité de calcul. Ce nouvel ensemble comprenant le capteur ultrasonore multiéléments, l'unité de mesure ultrasonore et l'unité de calcul constituent un système de mesure par ultrasons.

Ce système de mesure par ultrasons est lié dans ce mode de réalisation à un système de mesure pyrométrique (non représenté sur Fig.1) connu de l'homme du métier. Ce système pyrométrique comprend au moins un capteur pyrométrique, une unité de mesure pyrométrique et une unité de calcul. Ledit système de mesure pyrométrique contrôle en temps réel la qualité de la soudure laser réalisée en mesurant le facteur d'émission à chaque fois qu'un point de soudure est réalisé. Ledit capteur pyrométrique est calibré à chaque démarrage.

Lorsque le procédé selon l'invention est mis en œuvre le capteur multiéléments balaye la zone avec laquelle il est en contact pour collecter un ensemble d'atténuations ultrasonores caractérisant la qualité de la liaison à chaque point du cordon de soudure laser. Pour ce faire, le capteur ultrasonore multiéléments mesure soit l'écho de l'interface, c'est-à-dire la vibration ultrasonore 5 réfléchie au niveau de l'interface 7 où se trouve le cordon de soudure laser liant les deux pièces, soit l'écho de fond, au niveau de la face 8 extérieur de la pièce qui n'est pas en contact avec le capteur ultrasonore. La mesure de l'écho de fond est préférée car elle caractérise l'atténuation des ultrasons après un parcours aller-retour à travers le cordon de soudure laser.

Des amplitudes du signal ultrasonore sont ensuite obtenues et représentées dans une cartographie bidimensionnelle selon une échelle de couleurs. Ces amplitude de signale, en pourcentage, correspondent à l'inverse des atténuations ultrasonores mesurées.

Un point de soudure est considéré comme correctement soudé si l'amplitude du signal ultrasonore est supérieure à un seuil de 19%. L'ensemble des points de soudure dont le signal est supérieur à 19% représentent la longueur et la largeur du cordon de soudure.

La figure 2, représente schématiquement et à titre d'illustration un exemple d'image de cordon de soudure 3 obtenu. Dans ce diagramme, Lo représente la longueur totale du cordon de soudure laser, Pi représente la longueur de mesure du capteur et Li la largeur moyenne du cordon de soudure à un pas donné du capteur ultrasonore. La largeur maximum que peut mesurer un capteur, dépend de la nature du capteur, elle est par exemple de 9 mm pour un capteur du type comprenant un réseau linéaire de 22 éléments ayant une hauteur de 5 mm pour une longueur active de 10,9 mm.

La référence 31 correspond à une largeur théoriquement soudée. Cette largeur théoriquement soudée est déterminée comme étant la largeur assurant une tenue optimale de la soudure. La référence 32 représente le cordon de soudure laser réellement obtenu par l'ensemble des points de soudure dont le signal est supérieur à 19%. La largeur de ce cordon peut varier sur sa longueur, une largeur moyenne Li est déterminée à chaque pas.

Pour apprécier la solidité de ce cordon de soudure laser, l'unité de calcul, détermine une largeur pondérée Lp selon la formule :

$$Lp = \Sigma(Pi \times Li)/Lo,$$

où Pi est la longueur de mesure du capteur et Li la largeur moyenne du cordon de soudure, à chaque pas du capteur, Lo étant la longueur totale du cordon.

Lp est ensuite comparée à une certaine valeur seuil Ls, prédéterminée. Si Lp est supérieur ou égale à Ls, le cordon est de bonne qualité, dans le cas contraire le cordon est de mauvaise qualité.

Pour déterminer Ls, des tests par une technique de contrôle destructif, telle que la résistance à la traction ou au cisaillement, sont réalisées sur des couples de pièces en plastique, où chaque couple est lié par un cordon de soudure laser, et pour lesquels Lp a déjà été déterminée. Dans ces tests destructifs des forces de traction ou de cisaillement sont appliqués jusqu'à la rupture du cordon de soudure laser. Les données collectées sont ensuite reportées dans un graphique comportant les largeurs pondérées Lp sur un axe et les forces maximales supportées lors des tests destructifs sur un autre axe. La force maximale que doit supporter un cordon de soudure laser est déterminée en fonction du type de pièces soudées et de leur utilisation. A titre d'exemple, un hayon d'une voiture comporte deux pièces en polypropylène, appelées la doublure et le renfort qui sont liées par 24 cordons de soudure laser. Pour ce type d'application, la force maximale que doit supporter chaque cordon de soudure est fixée à 150 daN. Une telle force correspond à une largeur seuil Ls de 4 mm. La largeur optimale étant de 7 mm, qui correspond à une force de 230 daN. Ainsi, dans ce cas particulier de pièces d'un hayon de voiture, si Lp est supérieur ou égale à 4 mm, l'unité de calcul affiche OK, dans le cas contraire l'unité de calcul affiche NOK.

Une fois que le résultat du test par le système de mesure ultrasonore est obtenu, ce résultat est ensuite comparé et corrélé avec le résultat de test obtenu par le système pyrométrique au moment de la soudure laser. Le résultat de cette comparaison est exploité par un system d'apprentissage dans le but d'affiner la calibration du système de mesure pyrométrique.

Bien évidemment, il est possible de prévoir des variantes du présent mode de réalisation, sans pour autant sortir du cadre de l'invention. Par exemple la largeur pondérée seuil peut être déterminée par simulation.

**Revendications**

1. Procédé de diagnostic de la qualité d'un cordon de soudure laser réalisé entre deux pièces en plastique comprenant les étapes suivantes :

   a) Mesure d'un ensemble d'atténuations ultrasonores caractérisant ledit cordon de soudure laser en déplaçant un capteur à ultrasons le long dudit cordon de soudure laser ;
   b) Calcul d'une largeur pondérée Lp dudit cordon de soudure laser à partir dudit ensemble d'atténuations ultrasonores ;
   c) Comparaison de ladite largeur pondérée Lp à une largeur pondérée seuil Ls, prédéterminée, le cordon de soudure est considérée acceptable si Lp est supérieure ou égale à Ls ;

   le procédé comportant également une mesure pyrométrique permettant de renseigner sur la qualité du cordon de soudure, ladite mesure pyrométrique étant concomitante à la soudure par laser desdites deux pièces,
   et le résultat, concernant la qualité de la soudure, obtenu suivant les étapes a) à c), étant comparé avec le résultat obtenu par la mesure pyrométrique sur ledit cordon de soudure laser, cette comparaison permettant déterminer si le système pyrométrique doit être recalibré.

2. Procédé selon la revendication 1, **caractérisé en ce que** l'ensemble d'atténuations ultrasonores est obtenu par la technique à ultrasons multiéléments.

3. Procédé selon l'une des revendications 1 et 2, **caractérisé en ce que** ladite largeur pondérée seuil Ls est déterminée préalablement, par comparaison d'un ensemble de largeurs pondérées Lp obtenues sur un ensemble de paires de pièces en plastique où chaque paire est liée par un cordon de soudure laser, avec des résultats obtenus par une méthode de tests destructifs, sur lesdites paires de pièces en plastique.

4. Procédé selon la revendication 3, **caractérisé en ce que** ladite méthode de tests destructifs consiste en la résistance à la traction ou au cisaillement.

5. Procédé selon l'une des revendications 1 à 4, **caractérisé en ce que** ladite largeur pondérée Lp est calculée par la formule Lp = $\Sigma$(Pi x Li)/Lo, où Pi est la longueur de mesure du capteur et Li la largeur moyenne du cordon de soudure, à chaque pas du capteur, Lo étant la longueur totale du cordon.

6. Procédé selon l'une quelconque des revendications précédentes, **caractérisé en ce qu'**il comprend un cycle d'apprentissage qui exploite le résultat de ladite comparaison, pour affiner la calibration du système de mesure pyrométrique.

7. Dispositif de diagnostic de la qualité d'une soudure laser de deux pièces en plastique, comprenant un système de mesure pyrométrique, un capteur ultrasonore, une unité de mesure d'ultrasons et une unité de calcul, le dispositif étant configuré pour mettre en œuvre le procédé selon l'une des revendications précédentes.

## Patentansprüche

1. Verfahren zur Diagnose der Qualität einer Laserschweißraupe, die zwischen zwei Kunststoffteilen hergestellt ist, umfassend die folgenden Schritte:

   a) Messen einer Menge von Ultraschalldämpfungen, die die Laserschweißraupe charakterisieren, durch Bewegung eines Ultraschallsensors entlang der Laserschweißraupe;
   b) Berechnen einer gewichteten Breite Lp der Laserschweißraupe anhand der Menge von Ultraschalldämpfungen;
   c) Vergleichen der gewichteten Breite Lp mit einer vorbestimmten gewichteten Schwellenbreite Ls, die Schweißraupe wird als akzeptabel erachtet, wenn Lp größer oder gleich Ls ist;

   wobei das Verfahren ebenfalls eine pyrometrische Messung aufweist, die es ermöglicht, Auskunft über die Qualität der Schweißraupe zu geben, wobei die pyrometrische Messung mit dem Laserschweißen der zwei Teile einhergeht, und das Ergebnis in Bezug auf die Qualität der Schweißung, das gemäß den Schritten a) bis c) erhalten wurde, mit dem Ergebnis verglichen wird, das durch die pyrometrische Messung an der Laserschweißraupe erhalten wurde, wobei es dieser Vergleich ermöglicht, zu bestimmen, ob das pyrometrische System neu kalibriert werden muss.

2. Verfahren nach Anspruch 1, **dadurch gekennzeichnet, dass** die Menge von Ultraschalldämpfungen mit der Multi-Element-Ultraschalltechnik erhalten wird.

3. Verfahren nach einem der Ansprüche 1 und 2, **dadurch gekennzeichnet, dass** die gewichtete Schwellenbreite Ls zuvor durch Vergleich einer Menge gewichteter Breiten Lp, die an einer Menge von Kunststoffteilpaaren erhalten wurden, wobei jedes Paar durch eine Laserschweißraupe verbunden ist, mit Ergebnissen, die mit einem Verfahren destruktiver Prüfungen an den Kunststoffteilpaaren erhalten wurden, bestimmt wird.

4. Verfahren nach Anspruch 3, **dadurch gekennzeichnet, dass** das Verfahren destruktiver Prüfungen aus der Zug- oder Scherfestigkeit besteht.

5. Verfahren nach einem der Ansprüche 1 bis 4, **dadurch gekennzeichnet, dass** die gewichtete Breite Lp mittels der Formel Lp = $\sum$(Pi x Li)/Lo berechnet wird,
   wobei Pi die Messlänge des Sensors und Li die mittlere Breite der Schweißraupe bei jedem Schritt des Sensors ist, wobei Lo die Gesamtlänge der Raupe ist.

6. Verfahren nach einem der vorhergehenden Ansprüche, **dadurch gekennzeichnet, dass** es einen Lernzyklus umfasst, der das Ergebnis des Vergleichs nutzt, um die Kalibrierung des pyrometrischen Messsystems zu verfeinern.

7. Vorrichtung zur Diagnose der Qualität einer Laserschweißung zweier Kunststoffteile, umfassend ein pyrometrisches Messsystem, einen Ultraschallsensor eine Ultraschall-Messeinheit und eine Recheneinheit, wobei die Vorrichtung dazu ausgebildet ist, das Verfahren nach einem der vorhergehenden Ansprüche durchzuführen.

## Claims

1. Method for diagnosing the quality of a laser weld bead produced between two plastic parts comprising the following steps:

   a) measuring a set of ultrasonic attenuations characterizing said laser weld bead by moving an ultrasound sensor along said laser weld bead;
   b) calculating a weighted width Lp of said laser weld bead from said set of ultrasonic attenuations;
   c) comparing said weighted width Lp to a predefined weighted threshold width Ls, the weld bead being considered acceptable if Lp is larger than or equal to Ls,

   the method also including a pyrometric measurement allowing information to be obtained on the quality of the weld bead, said pyrometric measurement being concomitant to the laser welding of said two parts,
   the result, regarding the quality of the weld, obtained following steps a) to c), being compared with the result of the pyrometric measurement of said laser weld bead, this comparison making it possible to determine whether the pyrometric system needs to be recalibrated.

2. Method according to Claim 1, **characterized in that** the set of ultrasonic attenuations is obtained by the ultrasonic phased array technique.

3. Method according to one of Claims 1 and 2, **characterized in that** said weighted threshold width Ls is defined beforehand by comparing a set of weighted widths Lp obtained from a set of pairs of plastic parts, in which each pair is joined by a laser weld bead, with results obtained, by a destructive test method, from said pairs of plastic parts.

4. Method according to Claim 3, **characterized in that** said destructive test method consists of a method for testing tensile or shear strength.

5. Method according to one of Claims 1 to 4, **characterized in that** said weighted width Lp is calculated using the formula Lp = $\sum(Pi \times Li)/Lo$, where Pi is the measurement length of the sensor and Li the average width of the weld bead, in each stepwise position of the sensor, Lo being the total length of the bead.

6. Method according to any one of the preceding claims, **characterized in that** it comprises a learning cycle that exploits the result of said comparison, to refine the calibration of the pyrometric measuring system.

7. Device for diagnosing the quality of a laser weld between two plastic parts, comprising a pyrometric measuring system, an ultrasonic sensor, an ultrasound measuring unit and a computational unit, the device being configured to implement the method according to any one of the preceding claims.

EP 3 207 366 B1

**Fig. 1**

**Fig. 2**

**EP 3 207 366 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20050132809 A